# EUROPEAN PATENT APPLICATION

(11) **EP 2 891 946 A1**
(43) Date of publication of application: **08.07.2015**
(21) Application number: 13833994.0
(22) Date of filing: 05.07.2013
(51) Int. Cl.: G06F 3/00, G06F 17/00

(54) **INTERACTION METHOD AND INTERACTION DEVICE FOR INTEGRATING AUGMENTED REALITY TECHNOLOGY AND BULK DATA**

(30) Priority: 28.08.2012 KR 20120094484
(71) Applicant: Inha-Industry Partnership Institute, Incheon 402-751 (KR)
(72) Inventor: JO, Geun Sik, Incheon 406-731 (KR); LEE, Kee Sung, Seoul 152- 100 (KR)
(74) Representative: Nederlandsch Octrooibureau
(86) International application number: PCT/KR2013/006014
(87) International publication number: WO 2014/035041

(57) **Abstract**

The present invention relates to an interaction method and interaction device for integrating augmented reality technology and virtual objects for interaction with a user in an augmented reality. The interaction method for integrating augmented reality and bulk data comprises the steps of: defining an element for providing an interaction between a virtual object displayed on a screen of the augmented reality and a user; registering the actual virtual object on the screen of the augmented reality; and defining a communication protocol for the interaction between the augmented reality and the bulk data.

## Description

### [Technical Field]

Embodiments of the inventive concepts described herein relate to interaction method and system capable of unifying virtual objects for interaction with a user in augmented reality.

### [Background Art]

A augmented reality technology may include a marker-based access method and a non-marker-based access method. The marker-base access method may belong to a non-marker-based research category. As the non-marker access method, an interest point based technology to which the inventive concept is applied may be exemplified.

Technical steps for implementation and operation of augmented reality are as follows.
1. Writing a scenario about locations of images and parts to be recognized if an augmented reality system operates according to a scenario or a sequential procedure. This means the event that a work is carried out according to a sequential procedure such as aircraft or submarine maintenance.
2. Constructing database by collecting scenes including an object to be recognized in various angles at a real world. This step means that images are obtained by capturing a scene in various angles while a camera moves in front (representative image), left, right, top, and down directions.
3. Registering and writing abstract information (label, circle, button, thumbnail, video, image, text, etc.) of a virtual object to be augmented (information artifacts) at a real world image.
4. Manually/semi-automatically connecting match points between images, collected in various angles, and the representative image using a homography matrix to display virtual objects to be augmented at exact locations without sense of difference. If the homography is automatically calculated, this step can be omitted.
5. Comparing an image input in real time with an image stored at the database when a light is thrown on an object to be recognized using a camera, to find the representative image from the real world images, input in real time, and images stored at the database. Finding of the representative image is carried out even though there are found images, corresponding to left, right, top, and bottom directions, from among images (representative image, left, right, top, and down directions) collected in various angles.
6. Calculating the homography matrix between the representative image and a real world image input in real time after finding the representative image from the database. This step means that directions and locations are changed using the homography matrix to display virtual objects on the representative image at an exact location without sense of difference.
7. Interacting with virtual objects in real time. Detailed information of a virtual object that a user selects is displayed based on user's actions (e.g., mouse click, double click, mouse in, mouse out, voice control, gesture, etc.).

As the augmented reality technology is advanced, an attempt to apply it to industry fields continues to be made. However, if the amount of virtual object information is huge, it is difficult to unify a general augmented reality technology and virtual object information using an interaction method.

Up to now, since the augmented reality is implemented using the very small amount of data, it is easy to deal with the virtual object information. However, as the mass amount of data is processed in the augmented reality, there is required an interaction method for unification with virtual object information.

### [Disclosure]

### [Technical Problem]

In general, the augmented reality technology is a computer vision technology, and a study on a core engine of the augmented reality technology is focused on a technology (steps 5 and 6) of recognizing, tracking, and synthesizing objects. In contrast, in the event that a virtual object is the huge amount of document or big multimedia data as described above, management functions of a Knowledge Base System (KBS) are required to augment specific data corresponding to the context through real-time management and inference of data.

The KBS technology may be managed at the software platform different from and independent of the computer vision technology. In particular, since being continuously generated, revised, corrected, and managed through the internet media, the huge amount of data of the KBS is structuralized, and a technology is advanced such that an electronic document is managed through an ontology technology on a semantic web.

The software platform of the augmented reality technology is essentially different from a KBS-based software platform, and programming languages are different from each other. Accordingly, embodiments of the inventive concept provide an interaction method for connecting two systems after different platforms, that is, the augmented reality technology and the KBS are independently developed, an interaction method capable of providing the KBS with virtual object information (step 3) fit to AR context (step 7) through protocol definition, and a method for solving a problem through a protocol capable of being unified.

### [Technical Solution]

One aspect of embodiments of the inventive concept is directed to provide an interaction method for unification between an augmented reality and mass data. The interaction method may include defining an element for providing interaction between a user and a virtual object displayed on an augmented reality screen; registering the virtual object on the augmented reality screen actually; and defining a communication protocol for the unification between the augmented reality and the mass data.

The defining of an element may include defining an action of the user according to a type of the virtual object or a condition.

The action of the user may include a mouse click, a mouse over, a mouse double-click, a mouse scroll, gestures, and a voice control.

The registering of the virtual object may include connecting the virtual object an element defined for the interaction through direct or indirect expression.

As a structure for expressing the element defined for the interaction, a hotspot of the augmented reality screen may include an ID, a name, a position, a part number, an annotation element, and the annotation element may include a variety of types each including ID, name, position, and color attributes.

The defining of a communication protocol may include defining a structure about a response of an event issued in the augmented reality, and the protocol may be divided into a field portion and field value portion.

Another aspect of embodiments of the inventive concept is directed to provide an interaction system for unification between an augmented reality and mass data. The interaction system may include an element definition unit, an element registration unit, and a protocol definition unit. The element definition unit may define an element for providing interaction between a user and a virtual object displayed on an augmented reality screen. The element registration unit may register the virtual object on the augmented reality screen actually. The protocol definition unit may define a communication protocol for the unification between the augmented reality and the mass data.

### [Advantageous Effects]

According to an exemplary embodiment of the inventive concept, in unifying an augmented reality and mass data, a problem may be solved through three steps: AR client interaction element definition, AR client interaction element registration, and communication protocol and interaction definition.

It is possible to conduct effective unification and interaction of the augmented reality and the mass data using the above-described steps.

### [Description of Drawings]

FIG. 1 is a diagram for describing an interaction method for unification between a general augmented reality technology and virtual object information;
FIG. 2 is a flowchart illustrating an interaction method between an augmented reality technology and mass data, according to an exemplary embodiment of the inventive concept;
FIG. 3 is a diagram illustrating a virtual object or an interaction element in augmented reality, according to an exemplary embodiment of the inventive concept;
FIG. 4 is a diagram illustrating an example where an annotation object and an interaction element are registered and connected and is expressed in the form of XML, according to an exemplary embodiment of the inventive concept;
FIG. 5 is a diagram illustrating an initial communication method between augmented reality and a knowledge base system and a screen displayed in the initial communication method, according to an exemplary embodiment of the inventive concept;
FIG. 6 is a diagram illustrating a communication method for changing a context to No. 4 and a screen displayed in the communication method, according to an exemplary embodiment of the inventive concept;
FIG. 7 is a diagram illustrating a communication method for changing a context to No. 8 and a screen displayed in the communication method, according to an exemplary embodiment of the inventive concept;
FIG. 8 is a diagram illustrating a communication method for executing a mouse over on a screen of FIG. 7 and a screen displayed in the communication method, according to an exemplary embodiment of the inventive concept;
FIG. 9 is a diagram illustrating a communication method for executing a button click event on a screen of FIG. 8 and a screen displayed in the communication method, according to an exemplary embodiment of the inventive concept; and
FIG. 10 is a block diagram illustrating an interaction system according to an exemplary embodiment of the inventive concept.

### [Best Mode]

Below, interaction method and system for unification between augmented reality and mass data will be described with reference to accompanying drawings.

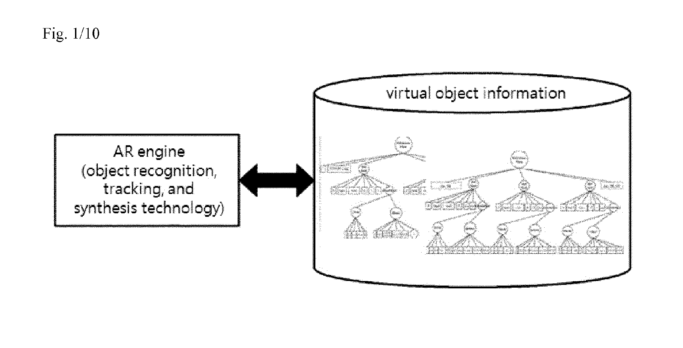

FIG. 1 is a diagram for describing an interaction method for unification between a general augmented reality technology and virtual object information. An augmented reality engine is being studied focusing on an object recognizing, tracking, and synthesizing technology corresponding to technical steps 5 and 6. In step 3, virtual object information is stored and used in the form of XML.

However, as the augmented reality technology is advanced, an attempt to apply it to industry fields continues to be made. However, in the event that the amount of virtual object information is huge, it is difficult to unify a general augmented reality technology shown in FIG. 1 and virtual object information using an interaction method.

The reason is that it is deficient in time and technique to process the huge amount of data.

In terms of the technique, dissimilar types of data are included in mass data, and it is impossible to acquire a semantic type of data directly from the dissimilar types of mass data. Such data is acquired through inference, and pieces of mass data are updated periodically.

Also, in terms of time, an augmented reality module and a mass data processing module are simultaneously developed to shorten a development time efficiently.

For example, in case of developing an augmented reality system for aircraft maintenance, an augmented reality engine module and a module for processing mass data of an aircraft manual are developed in parallel to reduce a development time efficiently.

Accordingly, up to now, since the augmented reality deals with the very small amount of data, it is easy to deal with the virtual object information. However, as the mass amount of data is processed at the augmented reality, there is required interaction method and system for unification with virtual object information.

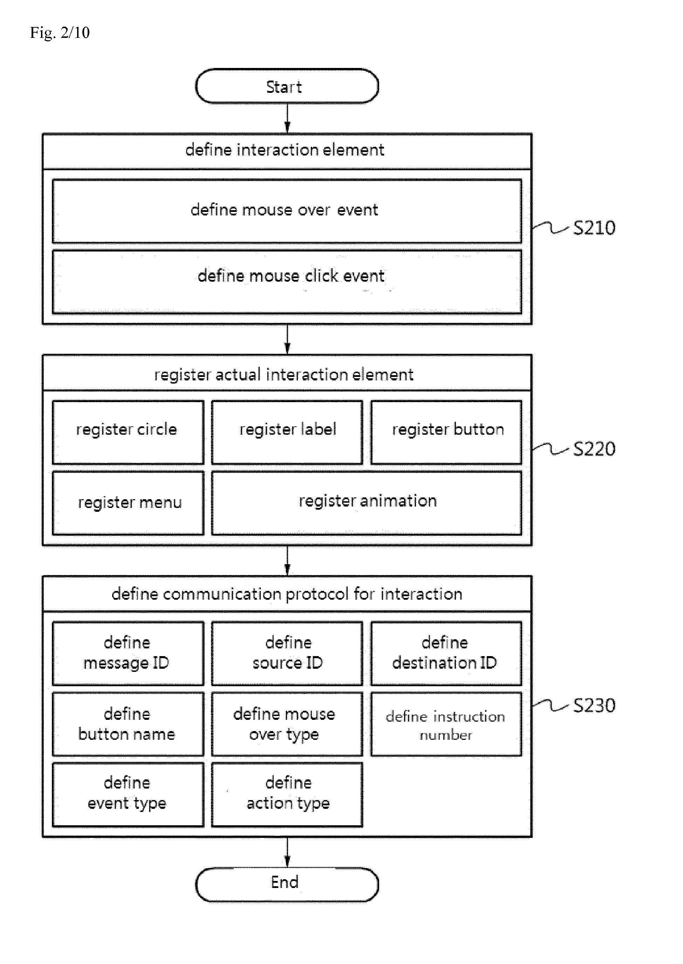

According to an exemplary embodiment of the inventive concept, an interaction method for unification between the augmented reality and mass data includes a step shown in in FIG. 2. The step means a connection between steps 3 and 7 of above-described steps 1 to 7 for implementing the augmented reality. The step 3 is associated with mass data stored at a Knowledge Base System (KBS), and the step 7 is associated with an interface for interaction with a user in an augmented reality system.

The step shown in in FIG. 2 includes an element for providing interaction between a user and a virtual object displayed on an augmented reality screen, that is, defining an interaction element (S210), registering a virtual object on the augmented reality screen actually as an augmented reality element registration step (S20), and defining a communication protocol for interaction between the augmented reality and mass data as a communication protocol and interaction definition step (S230).

In step S210, user actions, that is, mouse click, mouse over, double click, etc. according to a type of virtual object or a specific condition are defined. In particular, the user's actions may include actions such as gesture, voice, etc. including a mouse.

In exemplary embodiments, interaction elements that an augmented reality engine can generate are divided into two elements. A first element is a mouse over event. The mouse over event is to be set invisibly as a default value in synthesizing a virtual object on a real world image currently seen in real time.

If too much data is seen at a time in executing an event, a user is absorbed in the data and feels resistance due to too much data. Also, there is provided a method for solving the problem that virtual objects are overlapped when augmented on one screen. For this reason, when a user moves a mouse to a region of an object to be augmented with the object to be augmented hidden, it is recognized as a request about relevant information; therefore, a relevant virtual object is seen.

A second element is a mouse click event where an augmented object is clicked by a mouse. This event is issued by a user when the user wants to move to information about a virtual object seen in real time or to a next screen.

In other words, the mouse over event is to identify a visible virtual object and is displayed with a circle and a label for describing an object. The mouse click event is used as a link about a source connected with the outside, to display a submenu, or to switch to a next task such as a change in a user's viewpoint.

The term "user" mentioned in claims of the inventive concept may mean a device such as a mouse, etc. A user's action may include actions such as gesture, voice, etc. including a mouse.

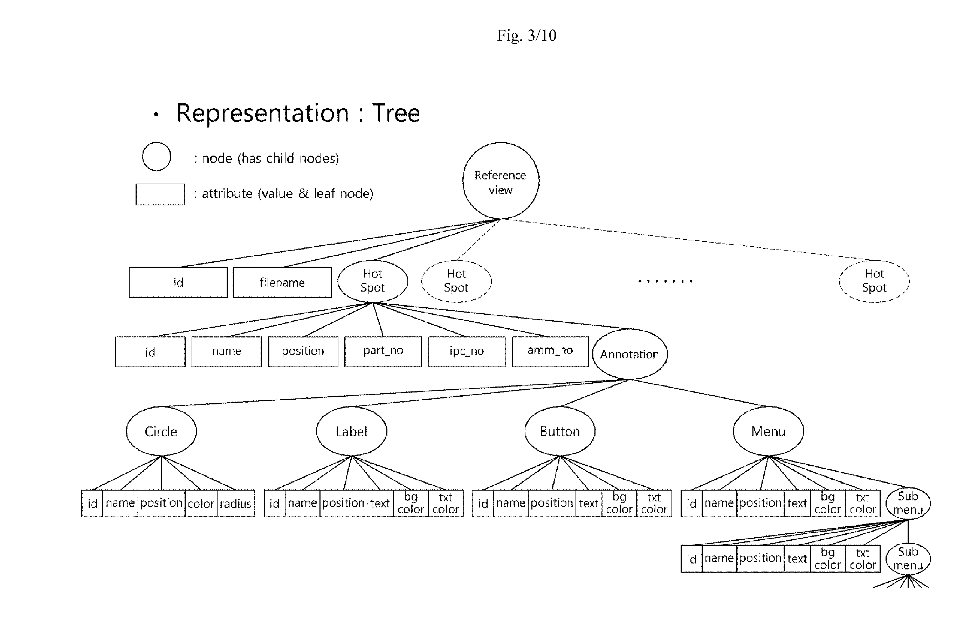

In an exemplary embodiment of the inventive concept, step S220 in which a virtual object is actually registered on an augmented reality screen may need a connection with an interaction element defined in step S210 for interaction with the user. FIG. 3 shows a structure for expressing a virtual object or an interaction element in the augmented reality, according to an exemplary embodiment of the inventive concept.

As a structure for expressing an interaction element, an augmented reality screen has attribute values such as ID, file name, hotspot, etc. In exemplary embodiments, the hotspot has ID, name, position, part number, and annotation element, and the annotation element has various types such as circle, label, button, menu, etc. Each type may be expressed to include attributes such as ID, name, position, color, etc.

In exemplary embodiments, the following table 1 shows relation between an annotation object and an interaction element.

**[Table 1]**

| Circle | |
|---|---|
| Description | Represents position of hotspot |
| Interaction | - |
| Attributes | id, name, position, color, radius |

| Label | |
|---|---|
| Description | Hotspot name |
| Interaction | - |
| Attributes | id, name, position, text, txtcolor, bgcolor |

| Button | |
|---|---|
| Description | interactive annotation which accepts event |
| Interaction | mouse click - link to external source or next task |
| Attributes | id, name, position, text, txtcolor, bgcolor |

| Menu | |
|---|---|
| Description | interactive annotation which accepts event |
| Interaction | mouse click - popup submenu or link to external source |
| Attributes | id, name, position, text, txtcolor, bgcolor, sub-menu |

| Animation | |
|---|---|
| Description | Animated image, video, instruction |
| Interaction | - |
| Attributes | id, name, image, start and end position, rotation etc. |

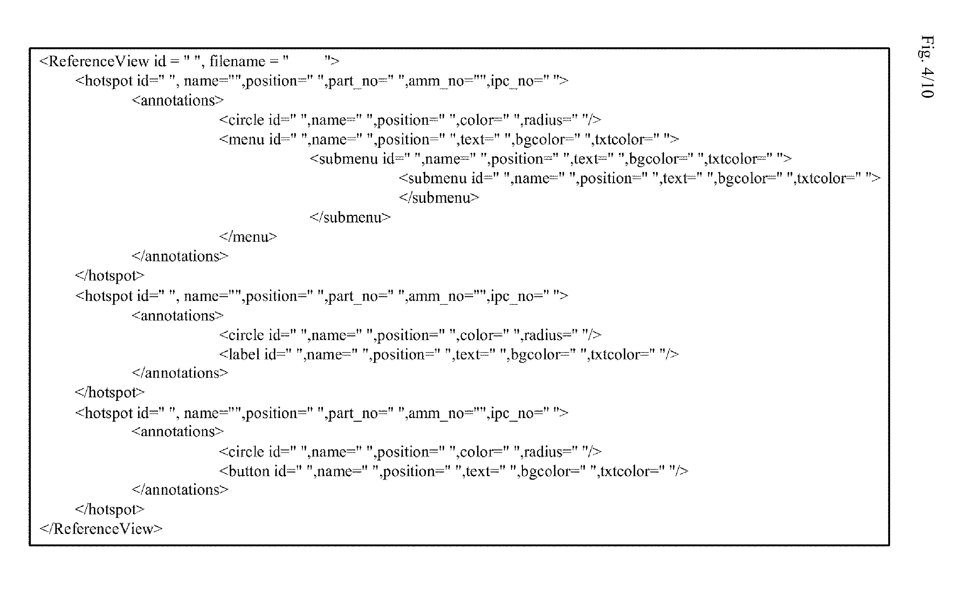

A connection between a virtual object and interaction may be made through direct expression at an annotation file such as XML, RDF, etc. or through indirect expression such as a coding level, etc. FIG. 4 shows an embodiment where an annotation object and an interaction element are registered and are connected through direction expression such as XML form.

Also, step S230 is step for defining a communication protocol and interaction. In step S230, a structure about a response of an event issued in the augmented reality is defined.

**[Table 2]**

| FIELD Name | Field Value |
|---|---|
| MESSAGE_ID (MID) | 100: Hello Message |
| | 110: ACK Hello Message |
| | 120: View Change Message |
| | 130: ACK View Change Message |
| | 140: Mouse Click Event Message |
| | 150: ACK Mouse Click Event Message |
| | 160: Mouse Over Event Message |
| | 170: ACK Mouse Over Event Message |
| | 180: Instruction Information Message |
| | 190: ACK Instruction Information Message |
| | 200: AR Control Message |
| | 201: ACK AR Control Message |
| SOURCE | 1: KBS |
| (S) | 2: AR |
| DESTINATION | 1: KBS |
| (D) | 2: AR |
| SLIDE_ID | String (e.g., 1, 2, 3...) |
| BUTTON_NAME | String (e.g., rv2_hsp1_bt1) |
| MOUSE_OVER_TYPE | 1: in |
| | 2: out |
| INSTRUCTION_NUMBER | String (e.g., INS-01, INS-02, INS-03... INS-10...) |
| EVENT_TYPE | 1: Previous |
| | 2: Next |
| ACTION_TYPE | 1: SHOW |
| | 2: HIDDEN |
| | 3: CLOSE |

The table 2 is to define a structure where an event issued in the augmented reality is transferred to KBS or an event received from KBS is processed and a response to the event is transferred to the augmented reality. In detail, the table 2 shows definition about a communication protocol for interaction between mass data and the augmented reality.

A field portion may include MESSAGE_ID, SOURCE, DESTINATION, SLIDE_ID, BUTTON_NAME, MOUSE_OVER_TYPE, INSTRUCTION_NUMBER, EVENT_TYPE, and ACTION_TYPE. Field and field value portions may include a character string, a number, and a special character. In particular, in words defined in the field portion, a semantic portion for expressing relevant information is more important than literal meaning of a character.

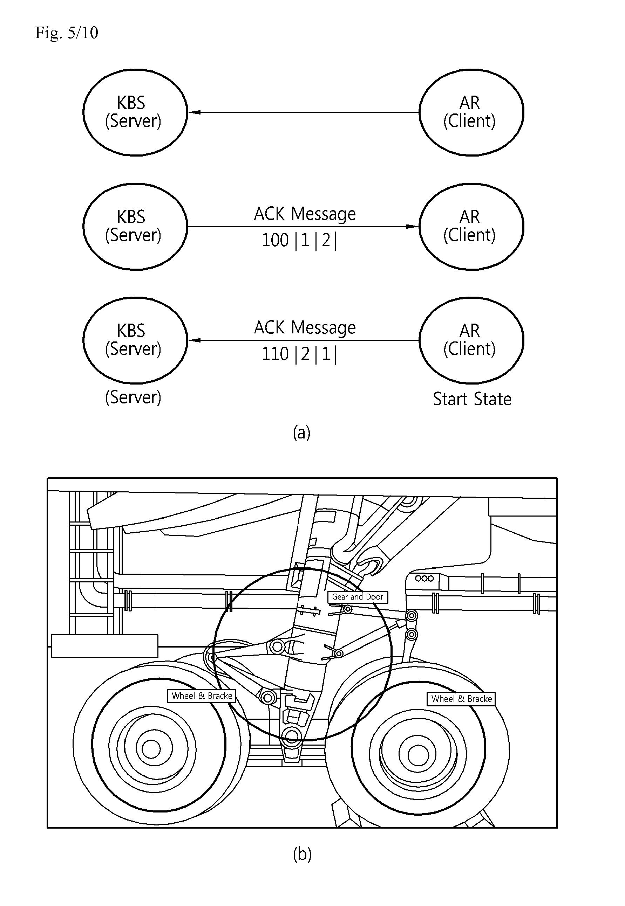

Below, interaction using a communication protocol according to an exemplary embodiment of the inventive concept will be described with reference to FIGS. 5 to 9. The following embodiment will be described with reference to the table 2.

FIG. 5A illustrates an initial communication method between Augmented Reality (AR) and Knowledge Base System (KBS), and FIG. 5B illustrates a screen on which information about an augmented object appearing according to the initial communication method is displayed.

In exemplary embodiments, a protocol of FIG. 5A may refer to the table 2. Initial signals "HELLO Message" and "ACK HELLO Message" are transmitted and received. A direction of the signal "HELLO Message" is a KBS-to-AR direction, and a direction of the signal "ACK HELLO Message" is an AR-to-KBS direction. In exemplary embodiments, an "ACK" signal is a transfer control character sent as a positive response from a receiving side with respect to a transmitting side and is a signal for transferring a content indicating that data is received without an error.

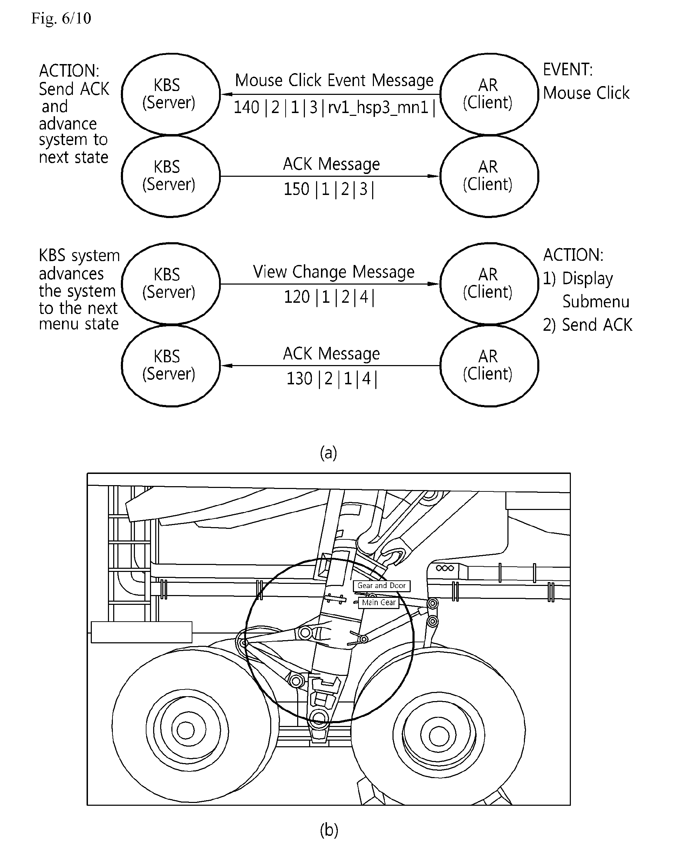

If a button "'Gear and Door" is clicked in the augmented reality of FIG. 5B, a communication method shown in FIG. 6A appears.

A "'Mouse Click Event Message" protocol about a mouse click event is sent from AR to KBS, and a response protocol is transferred from KBS to AR.

In exemplary embodiments, since a real-time AR context progresses to No. 4, a "'View Change Message" protocol about a screen change is sent from KBS to AR to change a screen about a mouse click. The augmented reality performs changing of a screen for displaying a submenu as illustrated in FIG. 6B.

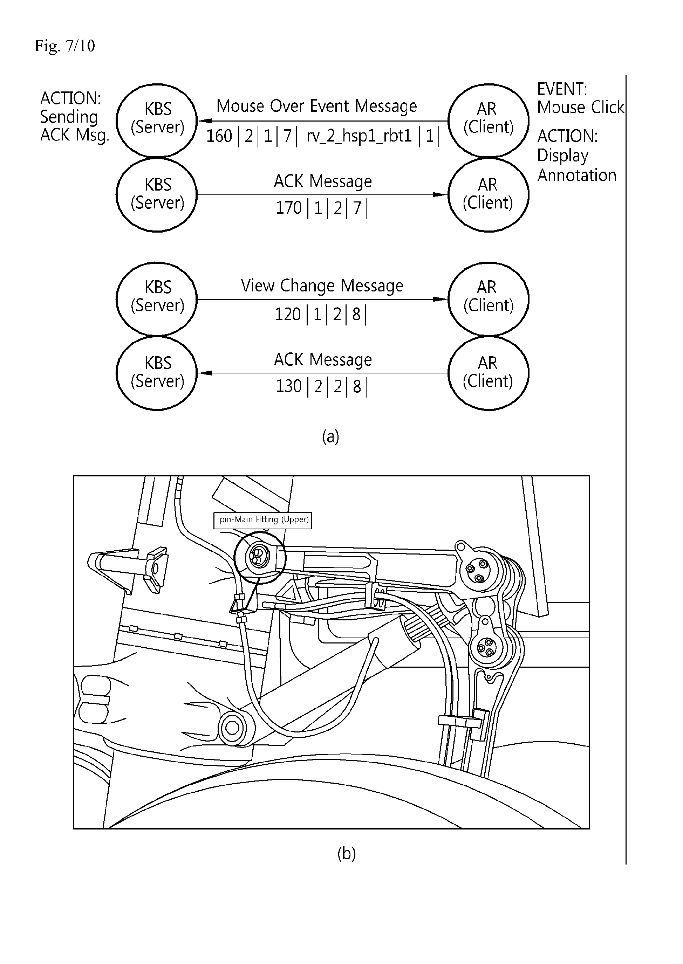

An AR mouse over event is used when a lot of information to be displayed is partially displayed according to a user's request. Accordingly, the user moves a mouse to a position of an interesting part and checks information. A communication method shown in FIG. 7A appears when the user moves the mouse to a necessary portion on an AR screen of FIG. 6B.

If the mouse is put at a specific region, annotation corresponding to a position where the mouse is located is displayed, and a "'Mouse Over Event Message(In)" protocol is sent to AR to KBS. KBS receiving the message sends a response message to AR, and "View Change Message" meaning moving of a context to No. 8 is sent to AR as a response to a relevant message based on a real-time AR context. The augmented reality moves and displays a screen to No. 8, as illustrated in FIG. 7B, based on the received message and sends a response to the message to KBS.

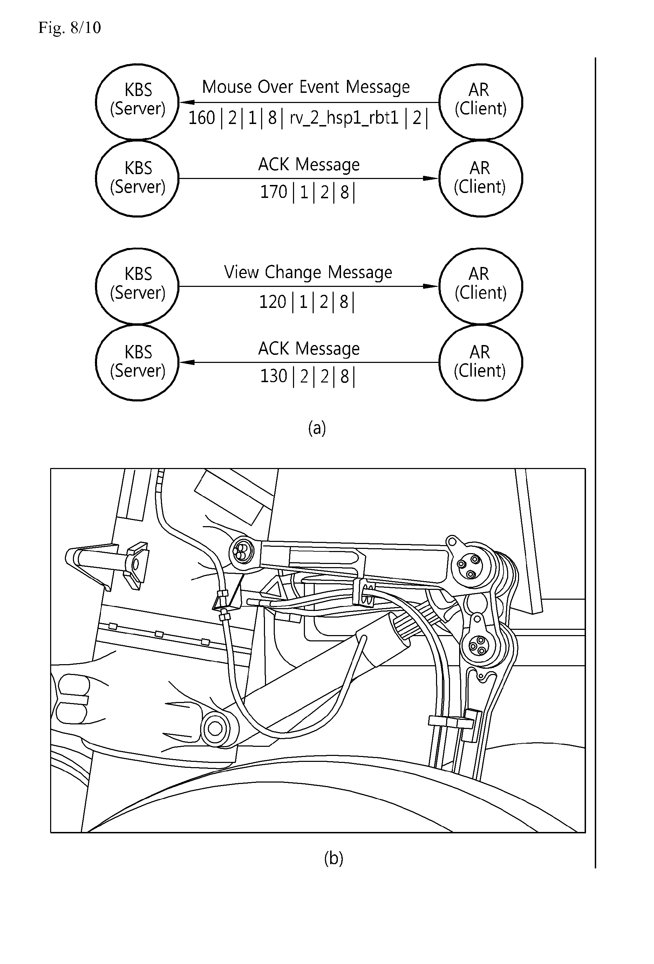

In exemplary embodiments, if a mouse moves into any other position in an AR scree region as illustrated in FIG. 7B, a "'Mouse Over Event Message(Out)" protocol is sent to KBS as illustrated in FIG. 8B.

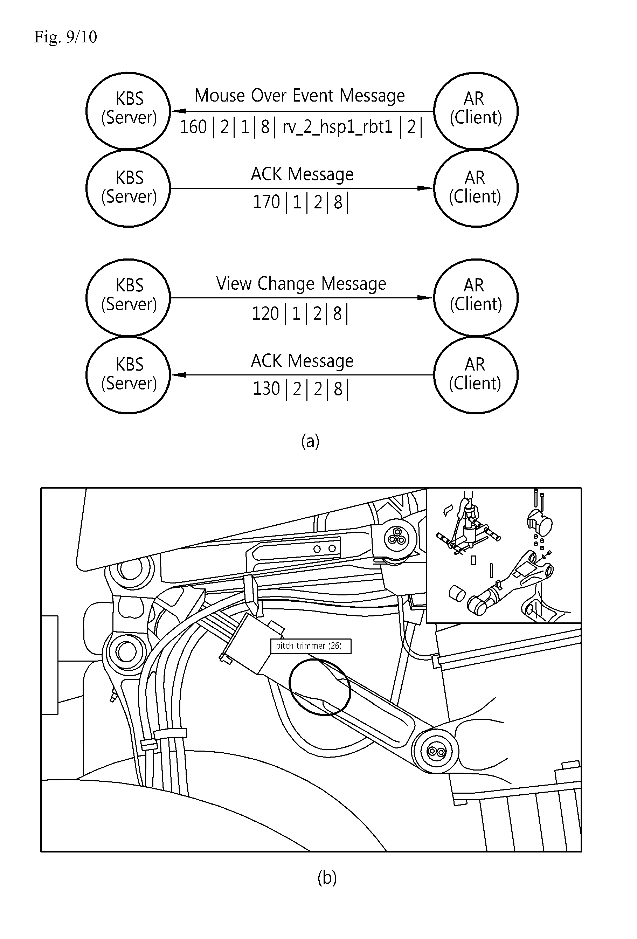

The KBS receiving the message sends a response message to AR and provides the augmented reality with "View Change Message" meaning moving of a context to No. 8 as a response to a relevant message based on a real-time AR context. The augmented reality receiving the message, as illustrated in FIG. 9B, removes the displayed annotation and displays an augmented reality screen.

In exemplary embodiments, in a real-time AR screen shown in FIG. 9B (AR screen excluding image on the right), information about a pitch trimmer is seen through a mouse over event of a 'pitch trimmer (26)' button.

As shown in FIG. 9A, "Mouse Over Event Message" is transmitted from AR to KBS. When receiving this message, KBS transmits an "ACK" message to AR. Based on the real-time AR context, KBS sends "View Change Message" meaning moving of a context to No. 8 to AR as a response to the mouse over event message.

Also, the AR displays information about "pitch trimmer" on a screen as illustrated in FIG. 9B. At this time, the information about the pitch trimmer may be displayed on the AR screen. Unlike FIG. 9B, the information artifact may be displayed in a pop-up screen separate from the AR screen. Alternatively, the pop-up screen may be at any location on the AR screen (e.g., top left, top right, bottom left, bottom right, etc.).

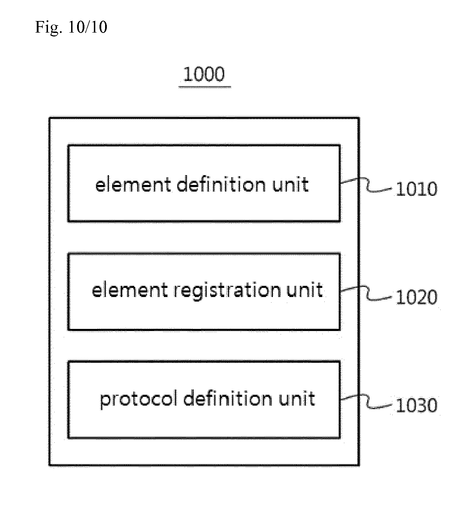

FIG. 10 illustrates an interaction system 1000 for unification between augmented reality and mass data. An interaction system 1000 includes an element definition unit 1010, an element registration unit 1020, and a protocol definition unit 1030.

The interaction system 1000 is a device that includes components for executing an interaction method shown in FIG. 2, and components of the interaction system 1000 are divided or merged to execute the inventive concept.

The element definition unit 1010 defines an element for providing interaction between a user and a virtual object displayed on an augmented reality screen, that is, an interaction element, the element registration unit 1020 registers an AR interaction element, that is, plays a role of registering a virtual object on the augmented reality screen actually, and the protocol definition unit 1030 defines communication protocol and interaction, that is, defines a communication protocol for interaction between the augmented reality and mass data

In exemplary embodiments, the element definition unit 1010 defines user actions, that is, mouse click, mouse over, double click, etc. according to a type of virtual object or a specific condition. In particular, the user's actions may include elements about actions such as gesture, voice, etc. as well as a mouse.

Also, the element registration unit 1020 registering a virtual object on the augmented reality screen actually, a connection with the interaction element defined by the element definition unit 1010 is necessary.

In exemplary embodiments, as a structure for expressing an interaction element, an augmented reality screen has attribute values such as ID, file name, hotspot, etc. In exemplary embodiments, the hotspot has ID, name, position, part number, and annotation element, and the annotation element has various types such as circle, label, button, menu, etc. Each type may be expressed to include attributes such as ID, name, position, color, etc.

The protocol definition unit 1030 defines a communication protocol and interaction. A structure about a response of an event issued in the augmented reality, in detail, a communication protocol for interaction between mass data and augmented reality is defined.

The interaction method for interaction between mass data and augmented reality according to the above-described exemplary embodiments of the inventive concept may be recorded in computer-readable media including program instructions to implement various operations embodied by a computer. The media may also include, alone or in combination with the program instructions, data files, data structures, and the like. The program instructions recorded in the media may be designed and configured specially for the exemplary embodiments of the inventive concept or be known and available to those skilled in computer software. Examples of computer-readable media include magnetic media such as hard disks, floppy disks, and magnetic tape; optical media such as CD ROM disks and DVDs; magneto-optical media such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules to perform the operations of the above-described exemplary embodiments of the inventive concept, or vice versa.

As described above, embodiments may be described with respect to restricted embodiments and drawings, but it is apparent to one skilled to the art that that change or modification on the embodiments is variously made from the above description. For example, described techniques may be performed in a sequence different from the described method, and/or components such as systems, structures, devices, circuits, etc. may be combined or connected differently from the described method. Although the components are replaced with other components or equivalents, an appropriate result may be achieved.

While the inventive concept has been described with reference to exemplary embodiments, it will be apparent to those skilled in the art that various changes and modifications may be made without departing from the spirit and scope of the inventive concept. Therefore, it should be understood that the above embodiments are not limiting, but illustrative.

## Claims

1. An interaction method for unification between an augmented reality and mass data, comprising:
defining an element for providing interaction between a user and a virtual object displayed on an augmented reality screen;
registering the virtual object on the augmented reality screen actually; and
defining a communication protocol for the unification between the augmented reality and the mass data.

2. The interaction method of claim 1, wherein the defining of an element comprises:
defining an action of the user according to a type of the virtual object or a condition.

3. The interaction method of claim 2, wherein the action of the user comprises a mouse click, a mouse over, a mouse double-click, a mouse scroll, gestures, and a voice control.

4. The interaction method of claim 1, wherein the registering of the virtual object comprises:
connecting the virtual object an element defined for the interaction through direct or indirect expression.

5. The interaction method of claim 4, wherein as a structure for expressing the element defined for the interaction, a hotspot of the augmented reality screen comprises an ID, a name, a position, a part number, an annotation element, and wherein the annotation element has a variety of types each including ID, name, position, and color attributes.

6. The interaction method of claim 1, wherein the defining of a communication protocol comprises:
defining a structure about a response of an event issued in the augmented reality, and
wherein the protocol is divided into a field portion and field value portion.

7. An interaction system for unification between an augmented reality and mass data, comprising:
an element definition unit configured to define an element for providing interaction between a user and a virtual object displayed on an augmented reality screen;
an element registration unit configured to register the virtual object on the augmented reality screen actually; and
a protocol definition unit configured to define a communication protocol for the unification between the augmented reality and the mass data.

8. The interaction system of claim 7, wherein the element definition unit defines an action of the user according to a type of the virtual object or a condition.

9. The interaction system of claim 8, wherein the action of the user comprises a mouse click, a mouse over, a mouse double-click, a mouse scroll, gestures, and a voice control.

10. The interaction system of claim 7, wherein the element registration unit connects the virtual object an element defined for the interaction through direct or indirect expression.

11. The interaction system of claim 10, wherein as a structure for expressing the element defined for the interaction, a hotspot of the augmented reality screen comprises an ID, a name, a position, a part number, an annotation element, and wherein the annotation element has a variety of types each including ID, name, position, and color attributes.

12. The interaction system of claim 7, wherein the protocol definition unit defines a structure about a response of an event issued in the augmented reality, and
wherein the protocol is divided into a field portion and field value portion.

13. A computer-readable media configured to record a program for executing a method of one of claims 1 to 6.
